# EUROPÄISCHE PATENTSCHRIFT

(11) **EP 1 697 188 B1**
(45) Veröffentlichungstag und Bekanntmachung des Hinweises auf die Patenterteilung: **27.06.2007**
(21) Anmeldenummer: 04802765.0
(22) Anmeldetag: 19.11.2004
(51) Int. Cl.: B60T 7/12, B60T 13/02, B60T 13/58, B60T 13/74, F16D 65/14

(54) **AUTOMATISIERTE FESTSTELLBREMSE**
AUTOMATIC PARKING BRAKE
FREIN DE PARKING AUTOMATISE

(30) Priorität: 19.12.2003 DE 20319903 U; 28.09.2004 DE 102004046871
(43) Veröffentlichungstag der Anmeldung: 06.09.2006
(73) Patentinhaber: Robert Bosch GmbH, 70442 Stuttgart (DE)
(72) Erfinder: HAFFELDER, Joerg, 74906 Bad Rappenau (DE); BLATTERT, Dieter, 74366 Kirchheim/Neckar (DE); HERTLEIN, Guenther, 74427 Fichtenberg (DE); BAEHRLE-MILLER, Frank, 71101 Schoenaich (DE)
(86) Internationale Anmeldenummer: PCT/DE2004/002552
(87) Internationale Veröffentlichungsnummer: WO 2005/061294

(56) Entgegenhaltungen:
- EP-A- 0 063 871
- GB-A- 2 358 897
- US-A- 3 688 875
- US-A- 3 805 924
- US-A- 5 148 894

## Beschreibung

### Stand der Technik

Die vorliegende Erfindung betrifft eine automatisierte Feststellbremse, um ein Fahrzeug festzustellen. Ferner betrifft die vorliegende Erfindung ein verbessertes Verfahren zur Betätigung einer automatisierten Feststellbremse.

US 3 688 875 beschreibt eine gattunsgemäße Feststellbremse.

Feststellbremsen sind aus dem Stand der Technik in unterschiedlichen Ausgestaltungen bekannt. Bisher verwenden Fahrzeuge häufig eine mechanische Feststellbremse, bei welcher der Fahrer über einen Handgriff und einen Seilzug die Feststellbremse des Fahrzeugs betätigt. In jüngster Zeit sind auch automatisierte Feststellbremsen vorgeschlagen worden, bei denen ein Fahrer die Feststellbremse über einen einfachen Knopfdruck bedient. Hierbei wird der Feststellbremswunsch des Fahrers einer Steuerung zugeführt, welche beispielsweise einen am Bremskolben angeordneten elektrischen Motor betreibt, um den Feststellbremswunsch auszuführen. Hierbei hat sich als nachteilig herausgestellt, dass die Feststellbremse aufgrund einer zusätzlichen Volumenaufnahme einen Einfluß auf das Betriebsbremssystem des Fahrzeugs hat. Ferner werden bei heutzutage bekannten automatisierten Feststellbremsen Sensoren verwendet, um die jeweilige Stellung der Feststellbremse, d.h. blockierter oder gelöster Zustand, zu bestimmen.

### Vorteile der Erfindung

Die erfindungsgemäße automatisierte Feststellbremse mit den Merkmalen des Patentanspruchs 1 weist demgegenüber den Vorteil auf, dass sie einen einfachen und kostengünstigen Aufbau ermöglicht. Ferner hat die erfindungsgemäße automatisierte Feststellbremse keinen Einfluss auf die Betriebsbremsung, insbesondere erfolgt keine zusätzliche Volumenaufnahme durch die Feststellbremse bei einer normalen Betriebsbremsung. Dies wird erfindungsgemäß dadurch erreicht, dass die automatisierte Feststellbremse einen Bremskolben, einen Hilfskolben, einen zwischen dem Bremskolben und dem Hilfskolben angeordneten Hydraulikraum, ein Federelement zur Vorspannung des Hilfskolbens, eine mit dem Hilfskolben über eine Gewindeverbindung verbundene Spindeleinrichtung und einen Antrieb für die Spindeleinrichtung aufweist. Der Bremskolben ist hierbei vorzugsweise der auch von der Betriebsbremse des Fahrzeugs verwendete Bremskolben. Im verriegelten Zustand der Feststellbremse wird der Bremskolben dabei über die Spindeleinrichtung und den federbelasteten Hilfskolben mechanisch verriegelt. Im gelösten Zustand der Feststellbremse wird der Hilfskolben durch das Federelement und/oder durch die Spindeleinrichtung fixiert.

Die Unteransprüche zeigen bevorzugte Weiterbildungen der Erfindung.

Der Antrieb der Spindeleinrichtung ist vorzugsweise ein Elektromotor. Alternativ kann als Antrieb auch ein Hydraulikantrieb oder ein Hydromotor oder ein magnetischer Antrieb verwendet werden.

Besonders bevorzugt umfasst die erfindungsgemäße automatisierte Feststellbremse eine Diagnoseeinrichtung zur Bestimmung eines verriegelten Zustands der Feststellbremse. Die Diagnoseeinrichtung umfasst dabei eine Erfassungseinrichtung zur Erfassung eines aufgenommenen Motorstroms des elektrischen Motors während des Verriegelungsvorganges bzw. Freigabevorganges. Anhand des aufgenommenen Motorstromes über die Zeit kann somit eine Diagnose des Zustandes (Feststellbremse verriegelt bzw. Feststellbremse gelöst) erfolgen. Hierbei kann erfindungsgemäß auf eine aufwendige zusätzliche Sensorik verzichtet werden.

Vorzugsweise wird bei jeder Betätigung der automatisierten Feststellbremse vor der eigentlichen Betätigung der Feststellbremse ein Blockierstrom des elektrischen Motors bestimmt. Dieser Wert des Kurzschlussstromes wird dabei als Referenzwert für die Diagnoseeinrichtung verwendet. Die Bestimmung des Blockierstromes kann dabei beim Verriegeln der Feststellbremse und/oder beim Lösen der Feststellbremse bestimmt werden.

Die erfindungsgemäße automatisierte Feststellbremse muss dabei nicht mit einem Nachstellmechanismus zur Kompensation eines Belagverschleißes betrieben werden, da sie diese Kompensation selbst übernehmen kann. Es sei jedoch angemerkt, dass die erfindungsgemäße automatisierte Feststellbremse auch mit den bekannten Nachstellmechanismen verwendet werden kann.

Weiter bevorzugt ist die Spindel in einem luftgefüllten Raum angeordnet. Dadurch kann vermieden werden, dass die Spindel mit der Bremsflüssigkeit in Verbindung gelangt, so dass an die Spindeleinrichtung keine speziellen Anforderungen gestellt werden müssen.

Vorzugsweise ist ein Dichtelement am Bremskolben zur Abdichtung des Hydraulikraumes gegen die Umgebung auch als Rückstellelement für den Bremskolben ausgebildet. Somit übernimmt das Dichtelement neben der Dichtfunktion auch noch gleichzeitig eine Rückstellfunktion für den Bremskolben. Das Dichtelement kann beispielsweise als Dichtmanschette ausgebildet sein.

Um zu verhindern, dass sich die Spindeleinrichtung der automatisierten Feststellbremse verklemmt, ist vorzugsweise eine Einrichtung zur Verhinderung eines Verklemmens der Spindeleinrichtung vorgesehen.

Die Einrichtung zur Verhinderung des Verklemmens der Spindeleinrichtung umfasst vorzugsweise an einem Kopf der Spindeleinrichtung ein vorstehendes Element und ein elastisches Element. Das elastische Element ist vorzugsweise eine Feder oder ein Elastomer. Um eine Reibung möglichst gering zu halten, ist das vorstehende Element am Kopf der Spindeleinrichtung vorzugsweise eine Kugel.

Gemäß einer anderen bevorzugten Ausbildung der vorliegenden Erfindung ist die Einrichtung zur Verhinderung eines Verklemmens der Spindeleinrichtung ein Anschlag. Der Anschlag umfasst dabei ein erstes und ein zweites Element. Das erste Element ist an einem Kopf der Spindeleinrichtung angeordnet und das zweite Element ist an einem Gehäuseteil der Feststellbremse angeordnet. In einer Anschlagposition befinden sich das erste Element und das zweite Element miteinander an einer Anschlagfläche in Kontakt, wobei die Anschlagfläche senkrecht zu einer Drehrichtung der Spindeleinrichtung ist. Der Anschlag ist dabei derart angeordnet, dass in der Anschlagsposition ein Zwischenraum zwischen der oberen Endfläche des Kopfes der Spindeleinrichtung und dem Gehäuseteil der Feststellbremse vorhanden ist, sodass ein Verklemmen der Spindeleinrichtung an ihrem Kopf verhindert werden kann.

Vorzugsweise ist eine Höhe des ersten und zweiten Elements des Anschlags kleiner als eine Gewindesteigung der Spindeleinrichtung. Dadurch wird sicher verhindert, dass der Kopf der Spindeleinrichtung mit dem Gehäusebauteil der Feststellbremse in Kontakt kommt und sich dort verklemmen kann.

Das erfindungsgemäße Verfahren zur Betätigen einer automatisierten Feststellbremse umfasst die Schritte des Betätigens der Spindeleinrichtung, bis sie den Bremskolben kontaktiert, des anschließenden Aufbauens eines Hydraulikdrucks im Hydraulikraum zwischen dem Bremskolben und dem Hilfskolben, um den Bremskolben derart zu bewegen, dass die Bremse in den verriegelten Zustand überführt wird, und den mit der Spindel verbundenen Hilfskolben in einer entgegengesetzter Richtung zum Bremskolben zu bewegen, wodurch die Spindel vom Bremskolben beabstandet wird. In einem nächsten Schritt wird die Spindeleinrichtung nochmals betätigt, bis die Spindeleinrichtung den Bremskolben wieder kontaktiert, so dass die Position des Bremskolbens mechanisch über die Spindeleinrichtung und den Hilfskolben fixiert ist. Anschließend wird der Hydraulikdruck im Hydraulikraum abgebaut. Wenn als Bremskolben der Feststellbremse der Bremskolben der Betriebsbremse des Fahrzeugs verwendet wird, was besonders vorteilhaft ist, da dann keine zusätzlichen Bauteile notwendig sind, wird erfindungsgemäß sichergestellt, dass während des Verriegelungsvorgangs der Feststellbremse nur ein gewisses Hydraulikvolumen verwendet wird. Nachdem die Feststellbremse verriegelt ist, wird der Hydraulikdruck im Hydraulikraum wieder abgebaut, so dass im verriegelten Zustand der Feststellbremse kein Hydraulikfluid aus dem Bremskreis der Betriebsbremse verwendet werden muss. Falls es nach dem Druckabbau im Hydraulikraum zu Setzerscheinungen an den Bauteilen der automatisierten Feststellbremse kommt, können diese durch die auf den Hilfskolben wirkende Feder ausgeglichen werden. Die Feder stellt eine gewisse Elastizität des Systems bereit. Die Feder ist weiter derart ausgelegt, dass sich die Federkraft bei einer kleinen Längenänderung der Feder praktisch nicht bzw. nur minimal ändert.

Vorzugsweise wird gemäß dem erfindungsgemäßen Verfahren die Spindeleinrichtung mittels eines Elektromotors angetrieben. Hierbei erfolgt eine Diagnose des Zustandes der Feststellbremse, d.h., ob sich die Feststellbremse im verriegelten oder gelösten Zustand befindet, anhand eines vom Elektromotor aufgenommenen Motorstromes. Hierbei kann eine Motorstromaufnahme über die Zeit mit gespeicherten Vergleichswerten verglichen werden. Die Vergleichswerte können fest in einem Speicher abgelegt sein, oder als Vergleichswerte können die Werte einer vorherigen Betätigung der Feststellbremse verwendet werden.

Weiter bevorzugt wird bei dem erfindungsgemäßen Verfahren vor dem Beginn der Betätigung der Spindel zum Verriegeln und/oder Lösen der Feststellbremse die Spindeleinrichtung mittels des Elektromotors in einer entgegengesetzten Richtung zur Betätigungsrichtung betrieben, so dass die Spindeleinrichtung an einem Bauteil anschlägt und eine Höhe eines Blockiermotorstromes bestimmt werden kann. Dieser Blockiermotorstrom kann dann jeweils unmittelbar im Diagnoseverfahren bei der Auswertung des Motorstromdiagramms des elektrischen Motors während der Betätigung der Feststellbremse verwendet werden.

Das Lösen der verriegelten Feststellbremse erfolgt vorzugsweise derart, dass zuerst ein Hydraulikdruck zwischen dem Bremskolben und dem Hilfsbremskolben aufgebaut wird und der elektrische Motor zur Betätigung der Spindeleinrichtung mit einer kontinuierlich steigenden Antriebskraft betrieben wird. Da der Hilfskolben durch das Federelement federbelastet ist, beginnt sich die Spindeleinrichtung im Hilfskolben erst dann zu drehen, wenn die Druckkraft im Hydraulikraum gleich bzw. etwas größer als die Federkraft ist. Dadurch kann weiterhin sichergestellt werden, dass ein optimaler Wirkungsgrad beim Lösen der Feststellbremse erreicht werden kann, da zum Betreiben der Spindeleinrichtung ein optimaler Motorstrom eingesetzt werden kann. Die Spindeleinrichtung wird dabei so lange betrieben, bis sie an einem Bauteil anschlägt. Anschließend wird der Hydraulikdruck im Hydraulikraum abgebaut, wodurch sich der Bremskolben und der Hilfskolben aufeinander zu bewegen. Da die Spindeleinrichtung mit dem Hilfskolben über die Gewindeverbindung verbunden ist, kommt die Spindeleinrichtung wieder außer Kontakt von dem Bauteil. Nach dem Ablassen des Hydraulikfluids aus dem Hydraulikraum wird die Spindel nochmals angetrieben, bis sie sich wieder in Kontakt mit dem Bauteil befindet. Dadurch ist die Feststellbremse in einen gelösten Zustand überführt worden.

Es sei angemerkt, dass beim Lösen zusätzlich noch eine Rückstellkraft auf den Bremskolben ausgeübt werden kann, um eine Rückstellung des Bremskolbens zu unterstützen. Hierzu kann ein separates Rückstellelement vorgesehen werden oder die Rückstellung erfolgt mittels eines Dichtelements, welches den Hydraulikraum von der Umgebung am Bremskolben abdichtet. Das Dichtelement kann beispielsweise als Manschette ausgebildet sein.

Die erfindungsgemäße automatisierte Feststellbremse bzw. das erfindungsgemäße Verfahren zur Betätigung der automatisierten Feststellbremse können einfach und kostengünstig realisiert werden. Insbesondere kann auch ein Diagnoseverfahren einfach integriert werden, so dass auf eine aufwendige Sensorik verzichtet werden kann. Überdies kann eine einfache Notlösevorrichtung vorgesehen werden, indem eine manuelle Betätigung der Spindeleinrichtung vorgesehen wird. Ferner kann sichergestellt werden, dass kein unbeabsichtigtes Verriegeln bzw. Lösen der Feststellbremse erfolgt, da zum Lösen bzw. Feststellen jeweils eine Ansteuerung des Antriebs, insbesondere des Elektromotors, notwendig ist. Da die erfindungsgemäße automatisierte Feststellbremse keine sich verjüngenden Flächen verwendet und somit keine Keilwirkungen ausnutzt, kann sie unabhängig von sich ändernden Reibverhältnissen betrieben werden. Dadurch kann die Betriebssicherheit deutlich verbessert werden und eine hohe Lebensdauer sichergestellt werden.

Da ferner der Hilfskolben mittels der Spindeleinrichtung im nicht benutzten Zustand der Feststellbremse gesichert ist, hat die erfindungsgemäße Feststellbremse keinen Einfluss auf die eigentliche Betriebsbremsung des Fahrzeugs, da keine zusätzliche Volumenaufnahme aufgrund der Feststellbremse notwendig ist. Da sich im gelösten Zustand der Feststellbremse der federbelastete Hilfskolben vorzugsweise schon in der Endlage befindet, tritt ein ungewolltes Verriegeln nicht auf.

### Zeichnung

Nachfolgend wird ein Ausführungsbeispiel unter Bezugnahme auf die begleitende Zeichnung beschrieben. In der Zeichnung ist:
- Figur 1: eine schematische Schnittansicht einer automatisierten Feststellbremse gemäß einem ersten Ausführungsbeispiel der vorliegenden Erfindung in einem Zustand vor dem Beginn eines Verriegelungsvorgangs,
- Figur 2: eine schematische Schnittansicht der Feststellbremse in einer zweiten Position während des Verriegelungsvorgangs,
- Figur 3: eine schematische Schnittansicht der Feststellbremse in einer dritten Position während des Verriegelungsvorgangs,
- Figur 4: eine schematische Schnittansicht der Feststellbremse in einer vierten Position während des Verriegelungsvorgangs,
- Figur 5: eine schematische Schnittansicht der Feststellbremse in einem verriegelten Zustand,
- Figur 6: ein Diagramm, welches die Stromaufnahme eines Elektromotors zum Antrieb der Feststellbremse über der Zeit darstellt,
- Figur 7: eine schematische Schnittansicht einer automatisierten Feststellbremse gemäß einem zweiten Ausführungsbeispiel der vorliegenden Erfindung, und
- Figur 8: eine schematische Schnittansicht einer automatisierten Feststellbremse gemäß einem dritten Ausführungsbeispiel der vorliegenden Erfindung.

### Beschreibung der Ausführungsbeispiele

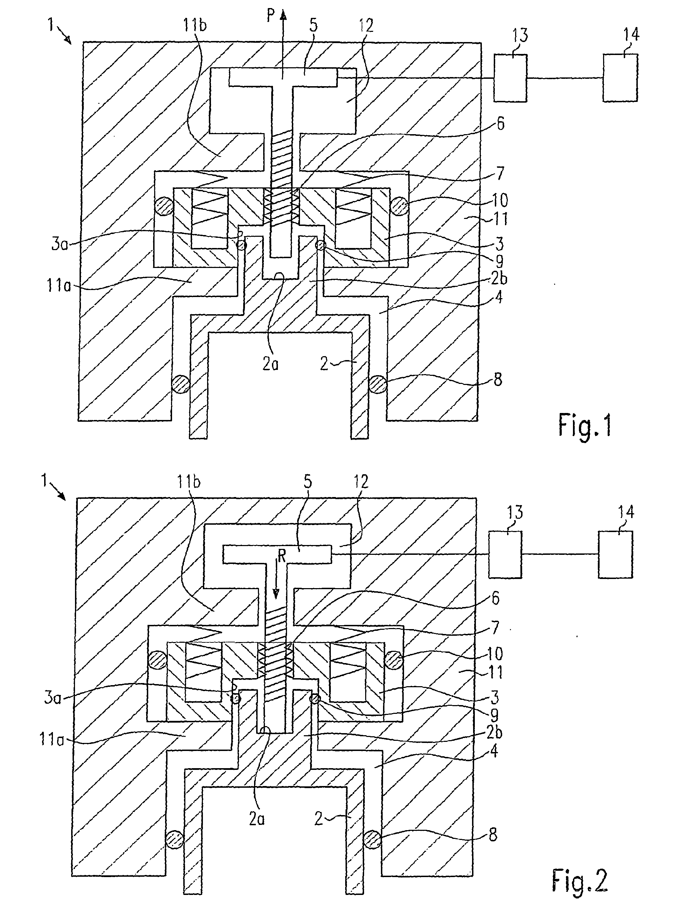

Nachfolgend wird unter Bezugnahme auf die Figuren 1 bis 6 eine automatisierte Feststellbremse 1 gemäß einem ersten Ausführungsbeispiel der Erfindung beschrieben.

Wie aus den Figuren 1 bis 5 ersichtlich ist, umfasst die erfindungsgemäße Feststellbremse 1 einen Bremskolben 2, einen Hilfskolben 3 und einen zwischen dem Bremskolben 2 und dem Hilfskolben 3 angeordneten Hydraulikraum 4. Ferner ist eine Spindel 5 vorgesehen, welche über eine Gewindeverbindung 6 mit dem Hilfskolben 3 verbunden ist. Ein Federelement 7 ist zwischen dem Hilfskolben 3 und einem Gehäuseteil 11 der Feststellbremse angeordnet und übt eine Federkraft auf den Hilfskolben 3 derart aus, dass der Hilfskolben 3 in Richtung des Bremskolbens 2 nach unten gedrückt wird. Dabei liegt der Hilfskolben auf einem Gehäusebereich 11a auf, wenn sich die Feststellbremse in einem gelösten Zustand befindet.

Wie aus den Figuren 1 bis 5 ersichtlich ist, ist der Hydraulikraum 4 mittels drei Dichtelementen 8, 9 und 10 abgedichtet. Genauer dichtet das Dichtelement 8 den Bremskolben 2 gegen die äußere Umgebung in Richtung einer nicht dargestellten Bremsscheibe ab. Das Dichtelement 9 ist zwischen dem Bremskolben 2 und dem Hilfskolben 3 angeordnet und das Dichtelement 10 ist zwischen dem Hilfskolben 3 und dem Gehäuseteil 11 der Feststellbremse angeordnet. Hierbei dichten die beiden Dichtelemente 9 und 10 den Hydraulikraum 4 gegen einen Raum 12 ab, in welchem die Spindel 5 und das Federelement 7 angeordnet sind. Dadurch wird sichergestellt, dass die Spindel 5 und das Federelement außerhalb des Hydraulikfluids angeordnet ist. Es sei jedoch angemerkt, dass grundsätzlich auch ein Betrieb der Spindel 5 im Hydraulikfluid möglich ist. Es sei angemerkt, dass eine Leitung zur Zuführung bzw. zum Entleeren des Hydraulikraums 4 aus Gründen einer verbesserten Übersichtlichkeit nicht in den Figuren 1 bis 5 dargestellt ist.

Ferner ist im Bremskolben 2 an dessen zum Hilfskolben 3 gerichteter Seite ein Bereich 2b mit einem verkleinerten Durchmesser ausgebildet, in welchem eine Sacklochbohrung 2a abgebildet ist. Die Sacklochbohrung 2a dient insbesondere zur Aufnahme eines Teils der Spindel 5 und bildet einen Anschlag für die Spindel 5.

Im Hilfskolben 3 ist eine stufenförmige Durchgangsbohrung 3a gebildet, wobei ein Teil der Stufenbohrung die Gewindeverbindung 6 mit der Spindel 5 bereitstellt. In dem Bereich der Stufenbohrung 3a mit größerem Durchmesser ist der Teil 2b des Bremskolbens 2 mit kleinerem Durchmesser aufgenommen. In diesem Bereich ist auch das Dichtelement 9 angeordnet. Die maximale Hubdifferenz zwischen dem Bremskolben 2 und dem Hilfskolben 3 ist dabei durch die Tiefe der ersten Stufe der Stufenbohrung 3a bestimmt.

Die erfindungsgemäße automatisierte Feststellbremse 1 verwendet somit zum Feststellen des Fahrzeugs den Bremskolben 2, welcher auch von der normalen Betriebsbremse des Fahrzeugs verwendet wird. Somit kann die Teilezahl für die automatisierte Feststellbremse reduziert werden. Dabei weist die erfindungsgemäße Feststellbremse einen kompakten Aufbau auf.

Das Dichtelement 8 ist als Dichtmanschette ausgebildet und übt eine Rückstellkraft auf den Bremskolben 2 in Richtung des Hilfskolbens 3 aus, sobald der Bremskolben 2 von seiner in Figur 1 dargestellten Ausgangslage nach unten bewegt wird.

Die Spindel 5 wird über einen nur schematisch dargestellten Elektromotor 13 angetrieben. Der Elektromotor 13 ist mit einer Diagnoseeinrichtung 14 verbunden. Die Diagnoseeinrichtung 14 verwendet den aufgenommenen Motorstrom des Elektromotors 13 zur Diagnose über einen Zustand der automatisierten Feststellbremse 1. Insbesondere stellt die Diagnoseeinrichtung 14 fest, ob sich die Feststellbremse 1 im verriegelten Zustand befindet oder ob sich die Feststellbremse 1 im gelösten Zustand befindet, nachdem ein entsprechender Betätigungsbefehl für die Feststellbremse, beispielsweise vom Fahrer durch Drücken eines Knopfes, gegeben wurde. Der Elektromotor 13 kann mit der Spindel 5 direkt verbunden sein, oder es kann ein Getriebe zwischen dem Elektromotor 13 und der Spindel 5 geschaltet sein.

Nachfolgend wird das Verfahren zur Betätigung der erfindungsgemäßen automatisierten Feststellbremse 1 beschrieben. Figur 1 zeigt hierbei die Ausgangsstellung der Feststellbremse 1, in welcher sich die Feststellbremse 1 im entriegelten bzw. gelösten Zustand befindet.

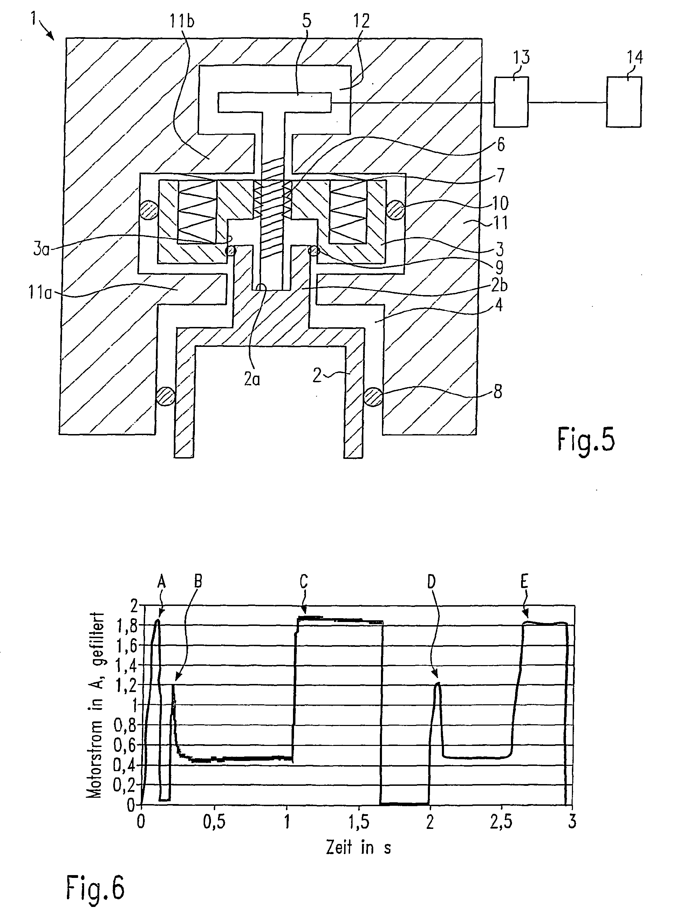

Ausgehend von dem in Figur 1 gezeigten entriegelten Zustand der Feststellbremse 1 wird der Elektromotor 13 zuerst derart betrieben, dass die Spindel 5 in Richtung des Pfeils P gegen den Gehäuseteil 11 gedrückt wird. Dieser Schritt vor der eigentlichen Betätigung der Feststellbremse dient zur Bestimmung eines Blockierstroms des Elektromotors 13. Wie aus dem Diagramm von Figur 6 ersichtlich ist, wird der Elektromotor 13 nur kurz betrieben, um den maximalen Blockierstrom zu ermitteln. In Figur 6 ist die Bestimmung des Blockierstromes durch den Buchstaben A gekennzeichnet. In diesem Ausführungsbeispiel beträgt der maximale Blockierstrom ca. 1,9 A.

Wenn der maximale Blockierstrom ermittelt ist, wird der Elektromotor angehalten und in die entgegengesetzte Richtung betrieben, um die Spindel 5 in Richtung des Pfeils R zu bewegen (vgl. Figur 2). In Figur 6 ist der Beginn der Betätigung der Spindel 5 in entgegengesetzter Richtung zum Pfeil P mit B bezeichnet. Die Spindel 5 dreht sich so lange in Richtung des Pfeils R, bis sie am Boden der Sacklochbohrung 2 anliegt. Da der Hilfskolben 3 am Gehäusebereich 11a anliegt und eine Verbindung des Hydraulikraums 4 mit einem Hydraulikspeicher unterbrochen ist, kann sich die Spindel 5 nicht weiter in Richtung des Pfeils R bewegen. Dadurch steigt der vom Elektromotor 13 aufgenommene Motorstrom wieder auf seinen Maximalwert an, was in Figur 6 mit dem Punkt C bezeichnet ist. Dieser Zustand ist in Figur 2 dargestellt.

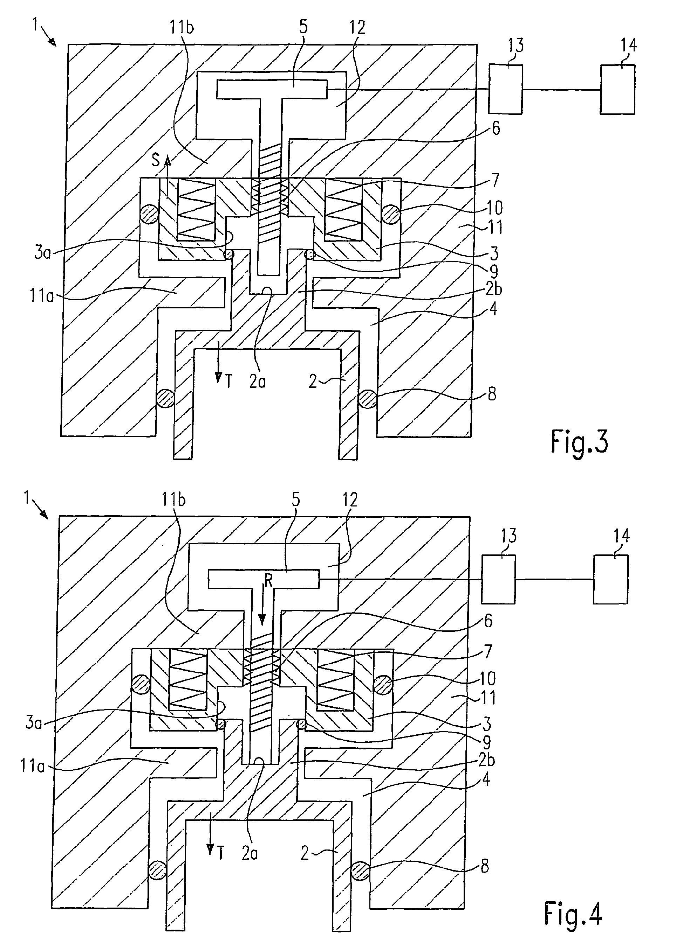

Wenn die Steuerung feststellt, dass die Spindel 5 am Bremskolben 2 anliegt, wird der Elektromotor abgestellt und Hydraulikfluid wird in den Hydraulikraum 4 zugeführt. Dadurch bewegt sich der Hilfskolben 3 in Richtung des Pfeils S nach oben, bis er am Gehäusebereich 11b anliegt und der Bremskolben 2 bewegt sich in Richtung des Pfeils T nach unten, um die Feststellung der Bremse auszuführen. Dieser Zustand ist in Figur 3 gezeigt. Da die Spindel 5 über die Gewindeverbindung 6 fest mit dem Hilfskolben 3 verbunden ist, wird die Spindel 5 ebenfalls nach oben bewegt.

Um eine mechanische Feststellung der Feststellbremse zu erreichen, wird der Elektromotor 13 wieder betrieben, so dass die Spindel 5 wieder nach unten in Pfeilrichtung R bewegt wird (vgl. Figur 4). Der Beginn der nochmaligen Betätigung des Elektromotors 13 ist in Figur 6 mit D bezeichnet. Die Spindel 5 wird dabei so lange nach unten bewegt, bis sie wieder am Bremskolben 2, genauer in der Sacklochbohrung 2a anliegt. Dieser Zustand ist in Figur 4 gezeigt und in Figur 6 mit dem Buchstaben E gekennzeichnet. Anschließend wird der Elektromotor 13 wieder abgestellt. Somit ist der Bremskolben 2 mechanisch über die Spindel 5 um den Hilfskolben 3 am Gehäuseteil 11 in seiner Position fixiert.

Anschließend wird das Hydraulikfluid aus dem Hydraulikraum 4 abgelassen. Dieser Zustand ist in Figur 5 gezeigt. Aufgrund von Setzvorgängen zwischen den einzelnen Bauteilen bzw. aufgrund von Spiel in der Gewindeverbindung 6 kann es vorkommen, dass sich der Hilfskolben 3 etwas nach unten bewegt. Dies ist zur besseren Darstellbarkeit in Figur 5 übertrieben dargestellt. Da zwischen dem Hilfskolben 3 und dem Gehäuseteil 11, genauer dem Behäusebereich 11b, jedoch das Federelement 7 angeordnet ist, wird die Position des Bremskolbens 2 nicht verändert, sondern das Federelement 7 drückt mittels seiner Federkraft über den Hilfskolben 3 und die Spindel 5 auf den Bremskolben 2. Somit ist eine mechanische Fixierung des Bremskolbens 2 trotz eventuell vorhandenem Spiel bzw. Setzvorgängen sichergestellt.

Die automatisierte Feststellbremse kann die Bremsposition des Bremskolbens 2 somit ohne Verwendung von Hydraulikfluid aus dem Betriebsbremskreislauf ermöglichen. Ferner wird während des Verriegelungsvorgangs die Spindel 5 immer in die gleiche Drehrichtung bewegt, so dass sich keine Abweichungen aufgrund eines eventuell vorhandenen Spiels der Spindel bei einer Richtungsumkehr ergibt. Weiterhin kann eine Kompensation eines eventuell vorhandenen Belagverschleißes an der Bremse durch einen vergrößerten Spindelhub auf einfache Weise ausgeglichen werden. Durch die Verwendung des Federelements 7 ist weiterhin eine gewisse Elastizität des Systems bei Setzvorgängen vorhanden.

Zum Lösen der Feststellbremse 1 wird ausgehend von Figur 5 zuerst Hydraulikfluid in den Hydraulikraum 4 zugeführt. Dann wird der Elektromotor 13 derart bestromt, dass er versucht, die Spindel 5 nach oben zu drehen. Da über das Federelement 7 und den Hilfskolben 3 eine sehr hohe Federkraft auf die Spindel 5 wirkt, gelingt es dem Elektromotor zuerst nicht, die Spindel zu bewegen. Erst wenn der Druck im Hydraulikraum 4 größer als die über den Hilfskolben 3 wirkende Federkraft des Federelements 7 wird, wird die Spindel 5 entlastet und der Hilfskolben 3 um einen geringen Betrag nach oben gedrückt, bis er wieder an dem Gehäusebereich 11b anliegt. Sobald der Druck im Hydraulikraum 4 etwas größer wird als die Federkraft, beginnt sich die Spindel 5 nach oben zu drehen. Die Spindel 5 wird dabei so lange gedreht, bis sie am Gehäuseteil 11 anschlägt und der Elektromotor 13 wieder den Blockierstrom aufnimmt. Wenn dies festgestellt wurde, kann der Druck im Hydraulikraum 4 wieder abgebaut werden, so dass sich der Hilfskolben 3 und der Bremskolben 2 wieder aufeinander zubewegen. Dabei wird der Hilfskolben 3 durch das Federelement 7 bewegt und der Bremskolben 2 wird durch eine Rückstellfunktion des Dichtelements 8 wieder in seine Ausgangsposition zurückgestellt. Die Spindel 5 ist hierbei etwas vom Gehäuseteil 11 beabstandet.

Durch die jeweiligen Diagramme der Stromaufnahme des Elektromotors 13 über die Zeit kann dabei auf einfache Weise eine Diagnose mittels der Diagnoseeinrichtung 14 der Feststellbremse ausgeführt werden. Der funktionale Ablauf der Feststell- bzw. Lösevorgänge kann über das Verhalten der Stromaufnahme des Elektromotors bestimmt werden. Somit kann auf Sensoren verzichtet werden.

Es sei angemerkt, dass aus Sicherheitsgründen selbstverständlich auch weitere Verfahren, wie z.B. ein Unlock-Test oder ein PV-Test durchgeführt werden können, um den verriegelten Zustand zu bestimmen.

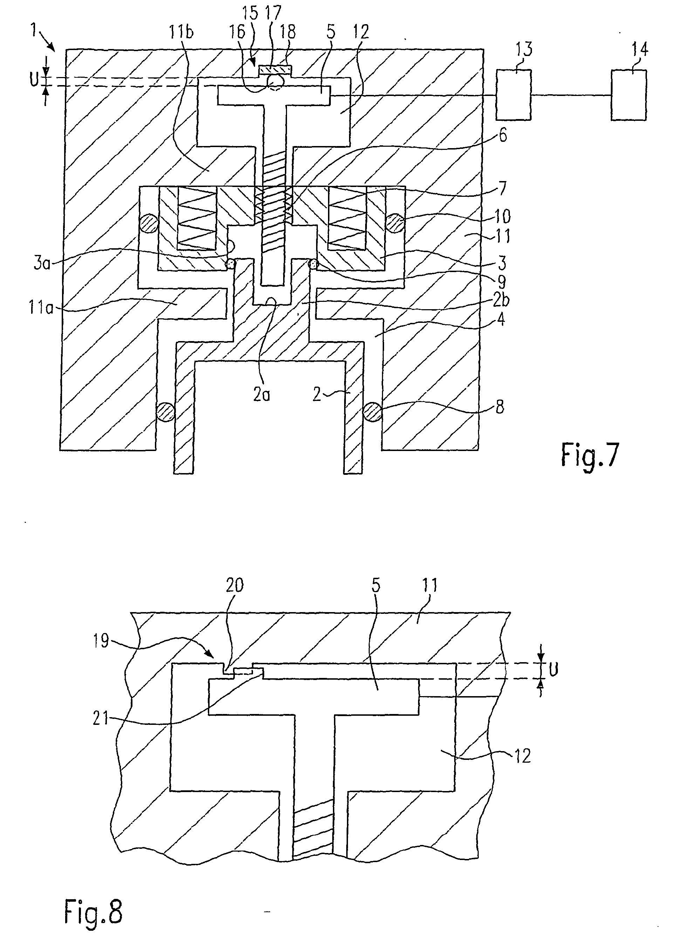

Figur 7 zeigt eine automatisierte Feststellbremse gemäß einem zweiten Ausführungsbeispiel der vorliegenden Erfindung. Gleiche bzw. funktional gleiche Teile sind dabei mit den gleichen Bezugszeichen wie im ersten Ausführungsbeispiel bezeichnet.

Im Unterschied zum ersten Ausführungsbeispiel weist die Feststellbremse 1 des zweiten Ausführungsbeispiels zusätzlich noch eine Einrichtung 15 zur Verhinderung eines Verklemmens der Spindeleinrichtung 5 auf. Wie aus Figur 7 ersichtlich ist, umfasst die Einrichtung 15 zur Verhinderung des Verklemmens eine Kugel 16 und ein Elastomer 17. Die Kugel 16 ist an einem Kopfbereich der Spindel 5 angeordnet. Das Elastomer 17 ist in einer im Gehäuseteil 11 gebildeten Ausnehmung 18 angeordnet. Die Bewegung der Spindel 5 wird somit durch die Einrichtung 15 zur Verhinderung des Verklemmens verhindert. Somit ist ein Spalt U zwischen dem Kopf der Spindeleinrichtung 5 und dem Gehäusebauteil sichergestellt, sodass keine Reibung zwischen dem Kopf der Spindeleinrichtung 5 und dem Gehäuseteil 11 möglich ist. Die Kugel 16 und das Elastomer 17 bilden somit einen Anschlag für die Spindeleinrichtung 5. Die Kraftübertragung im belasteten Zustand an das Gehäuseteil 11 erfolgt dabei über die Gewindeverbindung 6 zwischen der Spindel 5 und dem Gehäuseteil 11. Der Spalt U zwischen dem Kopf der Spindel 5 und dem Gehäuseteil 11 ist dabei groß genug, um auch bei einer thermischen Ausdehnung der Bauteile einen Kontakt zwischen dem Spindelkopf und dem Gehäuseteil zu vermeiden. Somit ist ein Lösen im belasteten Zustand durch den Spalt U jederzeit möglich. Da das an der Spindel 5 angeordnete Element als Kugel 16 ausgebildet ist, ist ein Kontakt zwischen der Kugel 16 und dem Elastomer 17 minimiert, sodass zwischen der Kugel 16 und dem Elastomer 17 nur eine minimale Reibung auftritt. Ansonsten entspricht dieses Ausführungsbeispiel den vorhergehenden Ausführungsbeispielen, sodass auf die dort gegebene Beschreibung verwiesen werden kann.

Figur 8 zeigt einen vergrößerten Ausschnitt einer Feststellbremse gemäß einem dritten Ausführungsbeispiel der vorliegenden Erfindung. Gleiche bzw. funktional gleiche Teile sind wieder mit den gleichen Bezugszeichen wie in den vorhergehenden Ausführungsbeispielen bezeichnet.

Das dritte Ausführungsbeispiel entspricht im Wesentlichen dem zweiten Ausführungsbeispiel und weist ebenfalls eine Einrichtung 15 zur Verhinderung eines Verklemmens der Spindel 5 auf. Im Unterschied zum zweiten Ausführungsbeispiel ist die Einrichtung zur Verhinderung des Verklemmens beim dritten Ausführungsbeispiel jedoch als Anschlag 19 ausgebildet. Wie aus Figur 8 ersichtlich ist, umfasst der Anschlag 19 ein erstes Element 20 und ein zweites Element 21. Das erste Element 20 ist ein am Gehäuseteil 11 gebildeter integraler Bereich, welcher in den Spindelraum 12 vorsteht. Das zweite Element 21 ist ein am Kopf der Spindel 5 gebildeter vorstehender Bereich, welcher vom Kopf der Spindel 2 nach außen vorsteht. Die Höhe des ersten bzw. zweiten Elements des Anschlags 19 ist derart gewählt, dass sich im Kontaktzustand zwischen dem ersten Element 20 und dem zweiten Element 21 eine Anschlagfläche bildet, welche senkrecht zu einer Umfangsdrehrichtung der Spindel 5 ist. Dadurch wird eine weitere Drehung der Spindel 5 verhindert, sodass der Kopfbereich der Spindel 5 nicht in Kontakt mit dem Gehäuseteil 11 kommen kann. Dadurch kann wieder der Spalt U zwischen dem Kopf der Spindel 5 und dem Gehäuseteil 11 aufrecht erhalten werden, sodass keine Reibung zwischen diesen beiden Teilen auftritt. Dadurch wird ein Verklemmen der Spindel 5 am Gehäuseteil 11 verhindert.

Die Höhe des Anschlags, d.h. des zweiten Elements 21 an der Spindel 5 ist dabei derart gewählt, dass sie kleiner ist als eine Gewindesteigung der Gewindeverbindung 6, d.h. kleiner als der Weg, welchen die Spindel 5 bei der vollen Umdrehung in Richtung der Spindelachse zurücklegt. Ansonsten entspricht das dritte Ausführungsbeispiel dem vorhergehenden Ausführungsbeispiel, sodass auf die dort gegebene Beschreibung verwiesen werden kann.

## Patentansprüche

1. Automatisierte Feststellbremse, umfassend einen Bremskolben (2), einen Hilfskolben (3), einen zwischen dem Bremskolben (2) und dem Hilfskolben (3) angeordneten Hydraulikraum (4), ein Federelement (7), um den Hilfskolben (3) vorzuspannen, eine mit dem Hilfskolben (3) über eine Gewindeverbindung (6) verbundene Spindeleinrichtung (5) und einen Antrieb (13) für die Spindeleinrichtung (5), wobei in einem verriegelten Zustand der Feststellbremse der Bremskolben (2) über die Spindeleinrichtung (5) und den federbelasteten Hilfskolben (3) mechanisch verriegelt ist und in einem gelösten Zustand der Feststellbremse der Hilfskolben (3) mittels des Federelements (7) und/oder mittels der Spindeleinrichtung blockiert ist.

2. Feststellbremse nach Anspruch 1, **dadurch gekennzeichnet, dass** der Antrieb (13) ein Elektromotor ist.

3. Feststellbremse nach Anspruch 2, **gekennzeichnet durch** eine Diagnoseeinrichtung (14) zur Bestimmung eines verriegelten und/oder gelösten Zustandes der Feststellbremse, wobei die Diagnoseeinrichtung (14) den Zustand der Feststellbremse anhand eines aufgenommenen Motorstroms des Elektromotors bestimmt.

4. Feststellbremse nach Anspruch 2 oder 3, **gekennzeichnet durch** eine Erfassungsvorrichtung, um vor jedem Verriegelungsvorgang und/oder vor jedem Lösevorgang einen Blockierstrom des Elektromotors festzustellen.

5. Feststellbremse nach einem der vorhergehenden Ansprüche, **dadurch gekennzeichnet, dass** ein Verschleiß an einem Bremsbelag durch einen vergrößerten Hub der Spindeleinrichtung (5) kompensierbar ist.

6. Feststellbremse nach einem der vorhergehenden Ansprüche, **dadurch gekennzeichnet, dass** die Spindeleinrichtung (5) in einem luftgefüllten Raum (12) angeordnet ist.

7. Feststellbremse nach einem der vorhergehenden Ansprüche, **dadurch gekennzeichnet, dass** ein Dichtelement (8) am Bremskolben (2) zur Abdichtung des Hydraulikraums (4) auch als Rückstellelement für den Bremskolben (2) ausgebildet ist.

8. Feststellbremse nach einem der vorhergehenden Ansprüche, **gekennzeichnet durch** eine Einrichtung (15; 19) zur Verhinderung eines Verklemmens der Spindeleinrichtung (5).

9. Feststellbremse nach Anspruch 8, **dadurch gekennzeichnet, dass** die Einrichtung zur Verhinderung eines Verklemmens der Spindeleinrichtung (5) ein an einem Kopf der Spindeleinrichtung (5) vorstehendes Element (16) und ein elastisches Element (17) umfasst.

10. Feststellbremse nach Anspruch 9, **dadurch gekennzeichnet, dass** das elastische Element (17) eine Feder oder ein Elastomer ist.

11. Feststellbremse nach Anspruch 9 oder 10, **dadurch gekennzeichnet, dass** das vorstehende Element (16) eine Kugel ist.

12. Feststellbremse nach Anspruch 8, **dadurch gekennzeichnet, dass** die Einrichtung (19) zur Verhinderung eines Verklemmens der Spindeleinrichtung ein Anschlag ist, wobei der Anschlag ein erstes Element (20) umfasst, welches am Kopf der Spindeleinrichtung (5) angeordnet ist, und ein zweites Element (21) umfasst, welches an einem Gehäuseteil (11) angeordnet ist, und in einer Anschlagposition sich das erste Element (20) mit dem zweiten Element (21) an einer Anschlagsfläche senkrecht zu einer Drehrichtung der Spindeleinrichtung (5) in Kontakt befindet.

13. Feststellbremse nach Anspruch 12, **dadurch gekennzeichnet, dass** eine Höhe des zweiten Elements (21) am Kopf der Spindeleinrichtung (5) kleiner als eine Gewindesteigung der Spindeleinrichtung (5) ist.

14. Verfahren zum Betätigen einer automatischen Feststellbremse (1) mit einem Bremskolben (2) und einem federbelasteten Hilfskolben (3), welcher über eine Gewindeverbindung (6) mit einer Spindeleinrichtung (5) verbunden ist, umfassend die Schritte:
- Betätigen der Spindeleinrichtung (5), bis die Spindeleinrichtung (5) den Bremskolben (2) kontaktiert,
- Aufbauen eines Hydraulikdrucks in einem zwischen dem Bremskolben (2) und dem Hilfskolben (3) angeordneten Hydraulikraum (4), wenn die Spindeleinrichtung (5) den Bremskolben kontaktiert, um mittels des Bremskolbens (2) die Feststellbremse in einem verriegelten Zustand zu überführen, und um den mit der Spindeleinrichtung (5) verbundenen Hilfskolben (3) in eine entgegengesetzte Richtung (S) zu bewegen, wobei die Spindeleinrichtung (5) vom Bremskolben (2) beabstandet wird,
- nochmaliges Betätigen der Spindeleinrichtung (5), bis die Spindeleinrichtung (5) den Bremskolben (2) wieder kontaktiert und die Position des Bremskolbens (2) mechanisch über die Spindeleinrichtung (5) und den Hilfskolben (3) fixiert ist, und
- Abbauen des Hydraulikdrucks im Hydraulikraum.

15. Verfahren nach Anspruch 14, **dadurch gekennzeichnet, dass** der Hilfskolben (3) mittels einer Federkraft eines Federelements (7) beaufschlagt wird, um den Bremskolben (2) in seiner festgestellten Position zu erhalten.

16. Verfahren nach Anspruch 14 oder 15, **dadurch gekennzeichnet, dass** die Spindeleinrichtung (5) mittels eines Elektromotors (13) angetrieben wird und eine Diagnose des Zustandes der Feststellbremse (1) anhand eines vom Elektromotor (13) aufgenommenen Motorstroms mittels einer Diagnoseeinrichtung (14) erfolgt.

17. Verfahren nach einem der Ansprüche 14 bis 16, **dadurch gekennzeichnet, dass** vor einem Feststellen und/oder Lösen der Feststellbremse (1) die Spindeleinrichtung (5) in einer Richtung entgegen einer Betätigungsrichtung der Spindeleinrichtung (5) gegen ein Bauteil bewegt wird, um eine Höhe eines Blockierstromes des Elektromotors (13) zu bestimmen.

18. Verfahren nach einem der Ansprüche 14 bis 17, **dadurch gekennzeichnet, dass** zum Lösen der verriegelten Feststellbremse (1) ein Hydraulikdruck im Hydraulikraum (4) aufgebaut wird, die Spindeleinrichtung (5) betätigt wird, um sich vom Bremskolben (2) zu entfernen, wobei sich die Spindeleinrichtung (5) erst dann dreht, wenn ein Druck im Hydraulikraum (4) gleich oder größer einer Federkraft des Federelements (7) wird und wobei die Spindeleinrichtung (5) so lange bewegt wird, bis sie mit einem Gehäuseteil (11) in Kontakt kommt, wobei nach dem Kontaktieren der Spindeleinrichtung (5) am Gehäuseteil (11) der Hydraulikdruck im Hydraulikraum (4) abgebaut wird, wodurch sich der Bremskolben (2) und der Hilfskolben (3) in Richtung aufeinander zubewegen, so dass die mit dem Hilfskolben (3) über die Gewindeverbindung (6) verbundene Spindeleinrichtung (5) außer Kontakt von dem Gehäuseteil (11) kommt.

19. Verfahren nach einem der Ansprüche 14 bis 18, **dadurch gekennzeichnet, dass** nach dem Abbauen des Hydraulikdrucks die Spindeleinrichtung (5) nochmals angetrieben wird, bis sie sich nochmals in Kontakt mit dem Gehäuseteil (11) kommt, um eine mechanische Fixierung des Hilfskolbens (3) im gelösten Zustand der Feststellbremse sicherzustellen.

## Claims

1. Automated parking brake, comprising a brake piston (2), an auxiliary piston (3), a hydraulic space (4) arranged between the brake piston (2) and the auxiliary piston (3), a spring element (7) in order to prestress the auxiliary piston (3), a spindle device (5) connected to the auxiliary piston (3) via a threaded connection (6), and a drive (13) for the spindle device (5), wherein, in a locked state of the parking brake, the brake piston (2) is mechanically locked via the spindle device (5) and the spring-loaded auxiliary piston (3), and, in a released state of the parking brake, the auxiliary piston (3) is blocked by means of the spring element (7) and/or by means of the spindle device.

2. Parking brake according to Claim 1, **characterized in that** the drive (13) is an electric motor.

3. Parking brake according to Claim 2, **characterized by** a diagnostic device (14) for determining a locked and/or released state of the parking brake, wherein the diagnostic device (14) determines the state of the parking brake with reference to a motor current taken by the electric motor.

4. Parking brake according to Claim 2 or 3, **characterized by** a detecting device in order to establish a blocking current of the electric motor before each locking operation and/or before each release operation.

5. Parking brake according to one of the preceding claims, **characterized in that** wear to a brake lining can be compensated for by an increased stroke of the spindle device (5).

6. Parking brake according to one of the preceding claims, **characterized in that** the spindle device (5) is arranged in an air-filled space (12).

7. Parking brake according to one of the preceding claims, **characterized in that** a sealing element (8) on the brake piston (2) for sealing the hydraulic space (4) is also designed as a resetting element for the brake piston (2).

8. Parking brake according to one of the preceding claims, **characterized by** a device (15; 19) for preventing jamming of the spindle device (5).

9. Parking brake according to Claim 8, **characterized in that** the device for preventing jamming of the spindle device (5) comprises an element (16) protruding at a head of the spindle device (5), and an elastic element (17).

10. Parking brake according to Claim 9, **characterized in that** the elastic element (17) is a spring or an elastomer.

11. Parking brake according to Claim 9 or 10, **characterized in that** the protruding element (16) is a ball.

12. Parking brake according to Claim 8, **characterized in that** the device (19) for preventing jamming of the spindle device is a stop, wherein the stop comprises a first element (20), which is arranged on the head of the spindle device (5), and comprises a second element (21), which is arranged on a housing part (11), and, in a stop position, the first element (20) is in contact with the second element (21) on a stop surface perpendicular with respect to a direction of rotation of the spindle device (5).

13. Parking brake according to Claim 12, **characterized in that** a height of the second element (21) at the head of the spindle device (5) is smaller than a thread pitch of the spindle device (5).

14. Method for actuating an automatic parking brake (1) with a brake piston (2) and a spring-loaded auxiliary piston (3) which is connected to a spindle device (5) via a threaded connection (6), comprising the steps:
- actuating the spindle device (5) until the spindle device (5) makes contact with the brake piston (2),
- building up a hydraulic pressure in a hydraulic space (4) arranged between the brake piston (2) and the auxiliary piston (3) when the spindle device (5) makes contact with the brake piston, in order to transfer the parking brake into a locked state by means of the brake piston (2), and in order to move the auxiliary piston (3) connected to the spindle device (5) in an opposite direction (S),
wherein the spindle device (5) is spaced apart from the brake piston (2),
- once again actuating the spindle device (5) until the spindle device (5) again makes contact with the brake piston (2) and the position of the brake piston (2) is fixed mechanically via the spindle device (5) and the auxiliary piston (3), and
- dissipating the hydraulic pressure in the hydraulic space.

15. Method according to Claim 14, **characterized in that** the auxiliary piston (3) is acted upon by means of spring force of a spring element (7) in order to keep the brake piston (2) in its locked position.

16. Method according to Claim 14 or 15, **characterized in that** the spindle device (5) is driven by means of an electric motor (13) and diagnosis of the state of the parking brake (1) with reference to a motor current taken by the electric motor (13) takes place by means of a diagnostic device (14).

17. Method according to one of Claims 14 to 16, **characterized in that** before the parking brake (1) is locked and/or released, the spindle device (5) is moved towards a component in a direction counter to an actuating direction of the spindle device (5) in order to determine the level of a blocking current of the electric motor (13).

18. Method according to one of Claims 14 to 17, **characterized in that**, in order to release the locked parking brake (1), a hydraulic pressure is built up in the hydraulic space (4) and the spindle device (5) is actuated in order to move away from the brake piston (2), wherein the spindle device (5) is rotated only when a pressure in the hydraulic space (4) is identical to or greater than a spring force of the spring element (7), and wherein the spindle device (5) is moved until it comes into contact with a housing part (11), wherein after the spindle device (5) comes into contact with the housing part (11), the hydraulic pressure in the hydraulic space (4) is dissipated, as a result of which the brake piston (2) and the auxiliary piston (3) move towards each other such that the spindle device (5), which is connected to the auxiliary piston (3) via the threaded connection (6), moves out of contact with the housing part (11).

19. Method according to one of Claims 14 or 18, **characterized in that**, after the hydraulic pressure is dissipated, the spindle device (5) is once again driven until it once again comes into contact with the housing part (11), in order to ensure that the auxiliary piston (3) is fixed mechanically in the released state of the parking brake.

## Revendications

1. Frein de stationnement automatisé, comprenant un piston de frein (2), un piston auxiliaire (3), une chambre hydraulique (4) comprise entre le piston de frein (2) et le piston auxiliaire (3), un élément de ressort (7) sollicitant le piston auxiliaire (3), un dispositif à broche (5) en liaison avec le piston auxiliaire (3) par l'intermédiaire d'un raccord fileté (6) et un entraînement (13) destiné au dispositif à broche (5), dans lequel, à l'état verrouillé du frein de stationnement, le piston de frein (2) est verrouillé mécaniquement par l'intermédiaire du dispositif à broche (5) et du piston auxiliaire (3) précontraint et, à l'état débloqué du frein de stationnement, le piston auxiliaire (3) est bloqué au moyen de l'élément de ressort (7) et/ou du dispositif à broche.

2. Frein de stationnement selon la revendication 1,
**caractérisé en ce que**
l'entraînement (13) est un moteur électrique.

3. Frein de stationnement selon la revendication 2,
**caractérisé par**
un dispositif de diagnostic (14) permettant de déterminer l'état verrouillé et/ou débloqué du frein de stationnement, détermine l'état du frein de stationnement sur la base d'un courant absorbé par le moteur électrique.

4. Frein de stationnement selon la revendication 2 ou 3,
**caractérisé par**
un dispositif de saisie destiné à établir un courant de blocage du moteur électrique avant chaque opération de verrouillage et/ou chaque opération de déblocage.

5. Frein de stationnement selon l'une des revendications précédentes,
**caractérisé en ce que**
l'usure d'une garniture de frein peut être compensée par une course accrue du dispositif à broche (5).

6. Frein de stationnement selon l'une des revendications précédentes,
**caractérisé en ce que**
le dispositif à broche (5) est dans une chambre (12) remplie d'air.

7. Frein de stationnement selon l'une des revendications précédentes,
**caractérisé en ce qu'**
un élément d'étanchéité (8) est conçu au niveau du piston de frein (2) pour étancher la chambre hydraulique (4) ainsi que pour servir d'élément de rappel pour le piston de frein (2).

8. Frein de stationnement selon l'une des revendications précédentes,
**caractérisé par**
un dispositif (15; 19) destiné à empêcher un enrayage du dispositif à broche (5).

9. Frein de stationnement selon la revendication 8,
**caractérisé en ce que**
le dispositif destiné à empêcher un enrayage du dispositif à broche (5) comprend un élément (16) faisant saillie au niveau de la tête du dispositif à broche (5) et un élément élastique (17).

10. Frein de stationnement selon la revendication 9,
**caractérisé en ce que**
l'élément élastique (17) est un ressort ou un élastomère.

11. Frein de stationnement selon la revendication 9 ou 10,
**caractérisé en ce que**
l'élément faisant saillie (16) est une bille.

12. Frein de stationnement selon la revendication 8,
**caractérisé en ce que**
le dispositif (19) destiné à empêcher un enrayage du dispositif à broche est une butée, la butée comprenant un premier élément (20) contre la tête du dispositif à broche (5) et un second élément (21) contre une partie de carter (11), et, dans une position d'arrêt, le premier élément (20) se trouve en contact avec le second élément (21) contre une surface d'arrêt perpendiculairement à un sens de rotation du dispositif à broche (5).

13. Frein de stationnement selon la revendication 12,
**caractérisé en ce que**
la hauteur du second élément (21) au niveau de la tête du dispositif à broche (5) est plus petite qu'un pas de filetage du dispositif à broche (5).

14. Procédé pour actionner un frein de stationnement (1) automatique comportant un piston de frein (2) et un piston auxiliaire (3) précontraint qui est raccordé à un dispositif à broche (5) par l'intermédiaire d'un raccord fileté (6), comprenant les étapes consistant à :
- actionner le dispositif à broche (5) jusqu'à ce que ce dispositif à broche (5) vienne en contact avec le piston de frein (2),
- élever une pression hydraulique dans une chambre hydraulique (4) comprise entre le piston de frein (2) et le piston auxiliaire (3), lorsque le dispositif à broche (5) vient en contact avec le piston de frein, afin de faire passer le frein de stationnement à un état verrouillé au moyen du piston de frein (2), et pour déplacer le piston auxiliaire (3) en liaison avec le dispositif à broche (5) dans une direction opposée (S), le dispositif à broche (5) étant éloigné du piston de frein (2),
- actionner de nouveau le dispositif à broche (5) jusqu'à ce que ce dispositif à broche (5) revienne en contact avec le piston de frein (2) et que la position du piston de frein (2) soit fixée mécaniquement via le dispositif à broche (5) et le piston auxiliaire (3), et
- abaisser la pression hydraulique régnant dans la chambre hydraulique.

15. Procédé selon la revendication 14,
**caractérisé en ce que**
le piston auxiliaire (3) est sollicité par la force élastique d'un élément de ressort (7) afin de maintenir le piston de frein (2) dans sa position fixe.

16. Procédé selon la revendication 14 ou 15,
**caractérisé en ce que**
le dispositif à broche (5) est entraîné au moyen d'un moteur électrique (13) et un dispositif de diagnostic (14) effectue un diagnostic de l'état du frein de stationnement (1) sur la base d'un courant absorbé par le moteur électrique (13).

17. Procédé selon l'une des revendications 14 à 16,
**caractérisé en ce que**
avant une fixation et/ou un déblocage du frein de stationnement (1), le dispositif à broche (5) est déplacé contre un composant dans une direction opposée à une direction d'actionnement du dispositif à broche (5) afin de déterminer une hauteur d'un courant de blocage du moteur électrique (13).

18. Procédé selon l'une des revendications 14 à 17,
**caractérisé en ce que**
pour débloquer le frein de stationnement (1) verrouillé, on augmente la pression hydraulique dans la chambre hydraulique (4), le dispositif à broche (5) est actionné pour s'éloigner du piston de frein (2), le dispositif à broche (5) ne tournant ensuite que lorsque la pression régnant dans la chambre hydraulique (4) devient égale ou supérieure à une force élastique de l'élément de ressort (7), et le dispositif à broche (5) est déplacé jusqu'à venir en contact avec une partie de carter (11), la pression hydraulique régnant dans la chambre hydraulique (4) étant abaissée à la suite du contact établi entre le dispositif à broche (5) et la partie de carter (11), moyennant quoi le piston de frein (2) et le piston auxiliaire (3) se déplacent l'un vers l'autre de sorte que le dispositif à broche (5) en liaison avec le piston auxiliaire (3) via le raccord fileté (6) perd son contact avec la partie de carter (11).

19. Procédé selon l'une des revendications 14 à 18,
**caractérisé en ce que**
à la suite de l'abaissement de la pression hydraulique, le dispositif à broche (5) est de nouveau entraîné jusqu'à revenir en contact avec la partie de carter (11) afin d'assurer une fixation mécanique du piston auxiliaire (3) à l'état débloqué du frein de stationnement.
